# EUROPEAN PATENT APPLICATION

(11) **EP 4 582 272 A1**
(43) Date of publication of application: **09.07.2025**
(21) Application number: 24759466.6
(22) Date of filing: 22.01.2024
(51) Int. Cl.: B60H 1/00, H01M 10/613, H01M 10/625

(54) **THERMAL MANAGEMENT SYSTEM AND VEHICLE**

(30) Priority: 22.02.2023 CN 202310187837
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: WANG, Jian, Ningbo, Zhejiang 315899 (CN); XIA, Songyong, Ningbo, Zhejiang 315899 (CN); LIU, Yabin, Ningbo, Zhejiang 315899 (CN); LIU, Chuang, Ningbo, Zhejiang 315899 (CN); HU, Lei, Ningbo, Zhejiang 315899 (CN); NIU, Wanying, Ningbo, Zhejiang 315899 (CN)
(74) Representative: Michalski Hüttermann & Partner Patentanwälte mbB
(86) International application number: PCT/CN2024/073515
(87) International publication number: WO 2024/174788

(57) **Abstract**

A thermal management system (100) and a vehicle (200). The thermal management system (100) is applied to the vehicle (200). The thermal management system (100) includes a compressor (10), a liquid-cooled gas cooler (20), a coaxial tube (30), an internal gas cooler (40), an external gas cooler (50), and an evaporator (60); the coaxial tube (30) includes a high-pressure inlet (31), a high-pressure outlet (32), a low-pressure inlet (33), and a low-pressure outlet (34); the low-pressure outlet (34) is connected to an inlet of the compressor (10); an outlet of the compressor (10) is connected to a first port (21) of the liquid-cooled gas cooler (20); a second port (22) of the liquid-cooled gas cooler (20) is connected to an inlet of the external gas cooler (50) and an inlet of the internal gas cooler (40); an outlet of the external gas cooler (50) is connected to the high-pressure inlet (31); an outlet of the internal gas cooler (40) is connected to a first port of the evaporator (60) and a low-pressure inlet (33); and a second port of the evaporator (60) is connected to the high-pressure outlet (32). Thus, the thermal management system (100) is not only applicable to a carbon dioxide refrigerant system, but also applicable to r134a/r1234yf/mixed refrigerant and other refrigerant systems. Moreover, by means of the liquid-cooled gas cooler (20) and the coaxial tube (30), the heat release efficiency of a refrigerant is enhanced, and the problem that a carbon dioxide module (101) has a poor efficiency in a cooling condition can be solved well.

## Description

### PRIORITY INFORMATION

The present application claims priority to and the benefit of Patent Application No. 202310187837.0, filed on February 22, 2023, with the China National Intellectual Property Administration, which is incorporated herein by reference in its entirety.

### TECHNICAL FIELD

The present disclosure relates to the field of vehicle technologies, and in particular, to a thermal management system and a vehicle.

### BACKGROUND

At present, a vehicle needs a heat pump system to implement heat exchange in the vehicle. R134a (1,1,1,2-Tetrafluoroethane) /r1234yf (2,3,3,3-Tetrafluoropropene) is applied in a conventional heat pump system as a refrigerant. A water-heating PTC heater is mainly used to heat a passenger compartment under a low-temperature operating condition, for example, below -18°C, and when an ambient temperature is lower than -18 °C, heating efficiency is insufficient. If carbon dioxide serves as the refrigerant, the heat pump system with the carbon dioxide has a low cooling efficiency.

### SUMMARY

Embodiments of the present disclosure provide a thermal management system and a vehicle.

A thermal management system according to embodiments of the present disclosure is applied to a vehicle. The thermal management system includes a compressor, a liquid-cooled gas cooler, a coaxial tube, an internal gas cooler, an external gas cooler, and an evaporator. The coaxial tube includes a high-pressure inlet, a high-pressure outlet, a low-pressure inlet, and a low-pressure outlet; the low-pressure outlet is connected to an inlet of the compressor; an outlet of the compressor is connected to a first port of the liquid-cooled gas cooler; a second port of the liquid-cooled gas cooler is connected to an inlet of the external gas cooler and an inlet of the internal gas cooler; an outlet of the external gas cooler is connected to the high-pressure inlet; an outlet of the internal gas cooler is connected to a first port of the evaporator and the low-pressure inlet; and a second port of the evaporator is connected to the high-pressure outlet.

A thermal management system according to embodiments of the present disclosure is applied to a vehicle. The thermal management system includes a compressor, a liquid-cooled gas cooler, a coaxial tube, an internal gas cooler, an external gas cooler, and an evaporator. The coaxial tube includes a high-pressure inlet, a high-pressure outlet, a low-pressure inlet, and a low-pressure outlet; the low-pressure outlet is connected to an inlet of the compressor; an outlet of the compressor is connected to a first port of the liquid-cooled gas cooler; a second port of the liquid-cooled gas cooler is connected to an inlet of the external gas cooler and an inlet of the internal gas cooler; an outlet of the external gas cooler is connected to the high-pressure inlet; an outlet of the internal gas cooler is connected to a first port of the evaporator and the low-pressure inlet; and a second port of the evaporator is connected to the high-pressure outlet. In this way, the thermal management system is not only applicable to the carbon dioxide refrigerant system, but also applicable to r134a/r1234yf/mixed refrigerant and other refrigerant systems. Moreover, by means of the liquid-cooled gas cooler and the coaxial tube, the heat release efficiency of the refrigerant is enhanced, and the problem that the carbon dioxide module has a poor efficiency in a cooling condition can be solved well. Meanwhile, the thermal management system can be operated stably in a low-temperature environment by using the carbon dioxide as the refrigerant. The coaxial tube is configured to carry out heat exchange between the refrigerant that has been throttled and cooled and the refrigerant before entering the evaporator, which can further reduce the enthalpy value of the refrigerant before entering the evaporator, thereby prolonging the performance of the evaporation stage and obtaining better cooling performance. In addition, the coaxial tube can improve the energy conversion efficiency in the cooling and heating processes. By use of the coaxial tube connected in series with the liquid-cooled gas cooler, the refrigerant is cooled in advance before entering the external gas cooler, such that the carbon dioxide releases heat more fully, and thus a cooling condition with higher efficiency is achieved.

In some embodiments, the thermal management system further includes a first control valve, a second control valve, a third control valve, and a fourth control valve. The the second port of the liquid-cooled gas cooler is connected to a first diversion node; the first diversion node is connected to the first control valve and the third control valve; the third control valve is connected to the inlet of the internal gas cooler; the first control valve is connected to a second diversion node; the second diversion node is connected to the inlet of the external gas cooler and the second control valve; the second control valve is connected to a third diversion node; the third diversion node is connected to the low-pressure inlet and the fourth control valve; the fourth control valve is connected to a fourth diversion node; and the fourth diversion node is connected to the outlet of the internal gas cooler and the first port of the evaporator. In this way, the first control valve, the second control valve, the third control valve, the fourth control valve, and the plurality of diversion nodes are disposed on the outlet side of the liquid-cooled gas cooler, so that the flow direction of the refrigerant can be controlled and adjusted, to implement different temperature control functions, thereby ensuring fast and accurate temperature adjustment to the vehicle. Moreover, the pressure of the refrigerant can be controlled and adjusted by using the liquid-cooled gas cooler and the coaxial tube, so that the carbon dioxide, which is more effective, can be used as the refrigerant to achieve temperature adjustment. Additionally, the plurality of control valves, the plurality of diversion nodes, the liquid-cooled gas cooler, and the coaxial tube may be integrated and modularized to form the carbon dioxide module, which may effectively reduce the number of pipe clamps and joints of the carbon dioxide module, reduce the risk of leakage of the refrigerant, and improve the reliability of system operation.

In some embodiments, the thermal management system further includes a first throttle valve connected between the outlet of the internal gas cooler and the fourth diversion node. In this way, the first throttle valve can throttle and cool the refrigerant, adjust the pressure of the refrigerant to a certain extent, and adjust low-temperature two-phase state of the refrigerant. After flowing out from the outlet of the internal gas cooler, the refrigerant may pass through the first throttle valve and then flow to the fourth diversion node, and then may flow to the fourth control valve and the evaporator. When the thermal management system is in different modes, the fourth control valve are in different on/off states, and the first throttle valve also controls the refrigerant at different flow rates, so that specific flow directions and flow rates of the refrigerant can be adjusted, to implement different functions.

In some embodiments, the thermal management system further includes a second throttle valve connected between the second port of the evaporator and a fifth diversion node, and the fifth diversion node is connected to the high pressure outlet. In this way, the second throttle valve can be configured to throttle and cool the refrigerant, adjust the pressure of the refrigerant to a certain extent, and adjust low-temperature two-phase state of refrigerant. After flowing out of the second port of the evaporator, the refrigerant may pass through the second throttle valve and then flow to the fifth diversion node, and then may flow to the chiller and the high-pressure outlet, respectively. When the thermal management system is in different modes, the second throttle valve controls the refrigerant at different flow rates, so that the flow rate of the refrigerant can be adjusted to implement different functions.

In some embodiments, the thermal management system further includes a chiller, a first port of the chiller is connected to the fifth diversion node through a third throttle valve, and a second port of the chiller is connected to the third diversion node. In this way, the chiller may be configured to allow the battery coolant to flow through, so that the battery coolant can exchange heat with the refrigerant, thereby implementing waste heat recovery, saving energy and reducing power consumption.

In some embodiments, the thermal management system further includes a power battery, a third port and a fourth port of the chiller are connected to the power battery, to adjust a temperature of the power battery by a battery coolant. In this way, the power battery may be configured to provide power for the vehicle, to drive normal operation of the vehicle. The power battery may generate heat during the operation thereof the. The battery coolant is configured to transfer the heat generated by the power battery to other positions and dissipate the heat. The battery coolant may flow through the chiller and exchange heat with the refrigerant flowing through the chiller, to implement heat recovery and reuse, and implement different mode functions.

In some embodiments, the thermal management system further includes a radiator, and the radiator is configured to cool the battery coolant. In this way, the radiator may be disposed outside the vehicle, and after the temperature of the battery coolant rises due to absorption of the heat, the battery coolant may flow through the radiator to release the heat, so that heat circulation can be implemented, and the normal operation of the power battery can be ensured.

In some embodiments, the thermal management system further includes an outdoor fan, and the outdoor fan is configured to dissipate heat for the radiator and the external gas cooler. In this way, after the heat from the battery coolant and the refrigerant is released through the radiator and the external gas cooler, the outdoor fan may be operated to quickly release the heat to the external environment, so as to ensure a heat dissipation effect.

In some embodiments, the thermal management system further includes a water pump, and the water pump is connected to the third port of the liquid-cooled gas cooler, and is configured to drive the battery coolant to enter the liquid-cooled gas cooler through a fourth port of the liquid-cooled gas cooler. In this way, the water pump may pump the battery coolant into the liquid-cooled gas cooler, so that the battery coolant and the refrigerant can exchange heat with each other, and the refrigerant can release the heat to the coolant for heat recovery. The water pump may adjust the flow rate and control the temperature of the refrigerant, thereby adjusting the temperature of the passenger compartment to a set value.

A vehicle according to embodiments of the present disclosure includes the thermal management system according to any one of the above embodiments.

In a thermal management system and a vehicle according to embodiments of the present disclosure, the thermal management system is applied to a vehicle. The thermal management system includes a compressor, a liquid-cooled gas cooler, a coaxial tube, an internal gas cooler, an external gas cooler, and an evaporator. The coaxial tube includes a high-pressure inlet, a high-pressure outlet, a low-pressure inlet, and a low-pressure outlet; the low-pressure outlet is connected to an inlet of the compressor; an outlet of the compressor is connected to a first port of the liquid-cooled gas cooler; a second port of the liquid-cooled gas cooler is connected to an inlet of the external gas cooler and an inlet of the internal gas cooler; an outlet of the external gas cooler is connected to the high-pressure inlet; an outlet of the internal gas cooler is connected to a first port of the evaporator and the low-pressure inlet; and a second port of the evaporator is connected to the high-pressure outlet. In this way, the thermal management system is not only applicable to the carbon dioxide refrigerant system, but also applicable to r134a/r1234yf/mixed refrigerant and other refrigerant systems. Moreover, the heat release efficiency of the refrigerant is improved by use of the liquid-cooled gas cooler and the coaxial tube, and thus the problem that the carbon dioxide module has a poor efficiency in a cooling condition can be solved well. At the same time, the thermal management system can be operated stably in a low-temperature environment by using the carbon dioxide as the refrigerant. The coaxial tube is configured to carry out heat exchange between the refrigerant that has been throttled and cooled and the refrigerant before entering the evaporator, which can further reduce the enthalpy value of the refrigerant before entering the evaporator, thereby prolonging the performance of the evaporation stage and obtaining better cooling performance. In addition, the coaxial tube can improve the energy conversion efficiency in the cooling and heating processes. By use of the coaxial tube connected in series with the liquid-cooled gas cooler, the refrigerant is cooled in advance before entering the external gas cooler, such that the carbon dioxide releases heat more fully, and thus a cooling condition with higher efficiency is achieved.

Additional aspects and advantages of the present disclosure will be set forth in part in the following description, and in part will be apparent from the following description, or may be learned by practice of the present disclosure.

### BRIEF DESCRIPTION OF DRAWINGS

The above and/or additional aspects and advantages of the present disclosure will become apparent and readily appreciated from the following description of embodiments with reference to the accompanying drawings, in which:
FIG. 1 is a schematic structural diagram of a thermal management system according to an embodiment of the present disclosure;
FIG. 2 is a schematic structural diagram of a vehicle according to an embodiment of the present disclosure;
FIG. 3 is a schematic structural diagram of a thermal management system according to another embodiment of the present disclosure; and
FIG. 4 is a schematic structural diagram of a thermal management system according to still another embodiment of the present disclosure.

Description of reference signs
thermal management system 100; carbon dioxide module 101; compressor 10; liquid-cooled gas cooler 20; first port 21; second port 22; third port 23; fourth port 24; water pump 25; coaxial tube 30; high-pressure inlet 31; high-pressure outlet 32; low-pressure inlet 33; low-pressure outlet 34; internal gas cooler 40; external gas cooler 50; evaporator 60; chiller 70; power battery 80; radiator 90; outdoor fan 91; first control valve 111; second control valve 112; third control valve 113; fourth control valve 114; first throttle valve 121; second throttle valve 122; third throttle valve 123; first diversion node 131; second diversion node 132; third diversion node 133; fourth diversion node 134; fifth diversion node 135; vehicle 200.

### DETAILED DESCRIPTION

Embodiments of the present disclosure will be described in detail below, and examples of the embodiments are illustrated in the accompanying drawings, in which the same or similar reference numerals represent the same or similar elements or elements having the same or similar functions throughout. The embodiments described below with reference to the accompanying drawings are exemplary and are used solely to explain the present disclosure, and cannot be construed as a limitation to the present disclosure.

In the present disclosure, a first feature being "on/over/above" or "beneath/under/below" a second feature may mean that the first and second features are in direct contact with each other, or the first and second features are not in direct contact with each other but are in contact with another feature between the first and second features, unless expressly specified or defined otherwise. Moreover, the first feature being "above," "over," and "on" the second feature means that the first feature is directly above/over/on and obliquely above/over/on the second feature, or merely means that a level of the first feature is higher than that of the second feature. The first feature being "below," "under," and "beneath" the second feature means that the first feature is directly below/under/beneath and obliquely below/under/beneath the second feature, or merely means that a level of the first feature is lower than that of the second feature.

Various embodiments or examples for implementing different structures of the present disclosure are provided below. To simplify the description of the present disclosure, components and settings in specific examples are described below. However, these specific examples are merely examples and are not intended to limit the present disclosure. In addition, reference numerals and/or reference letters may appear repeatedly in different examples of the present disclosure for the purpose of simplicity and clarity, instead of indicating a relationship between the various embodiments and/or settings as discussed. In addition, the present disclosure provides examples of various specific processes and materials, but applications of other processes and/or the use of other materials may be conceivable for those of ordinary skill in the art.

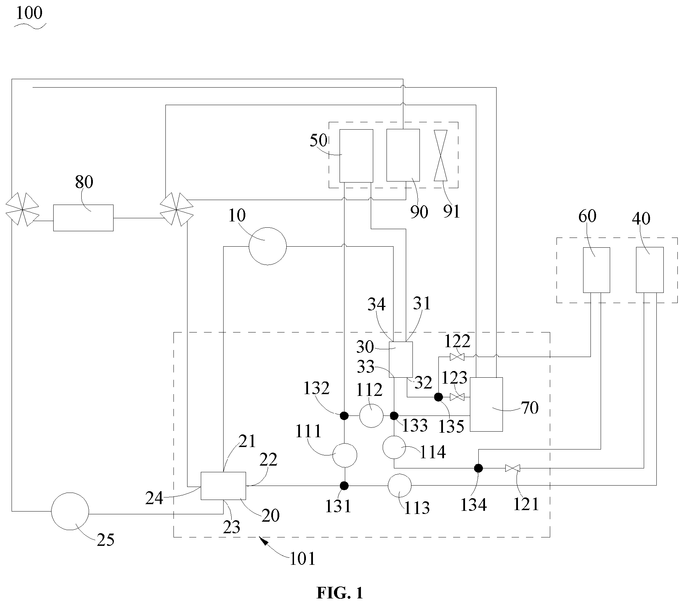

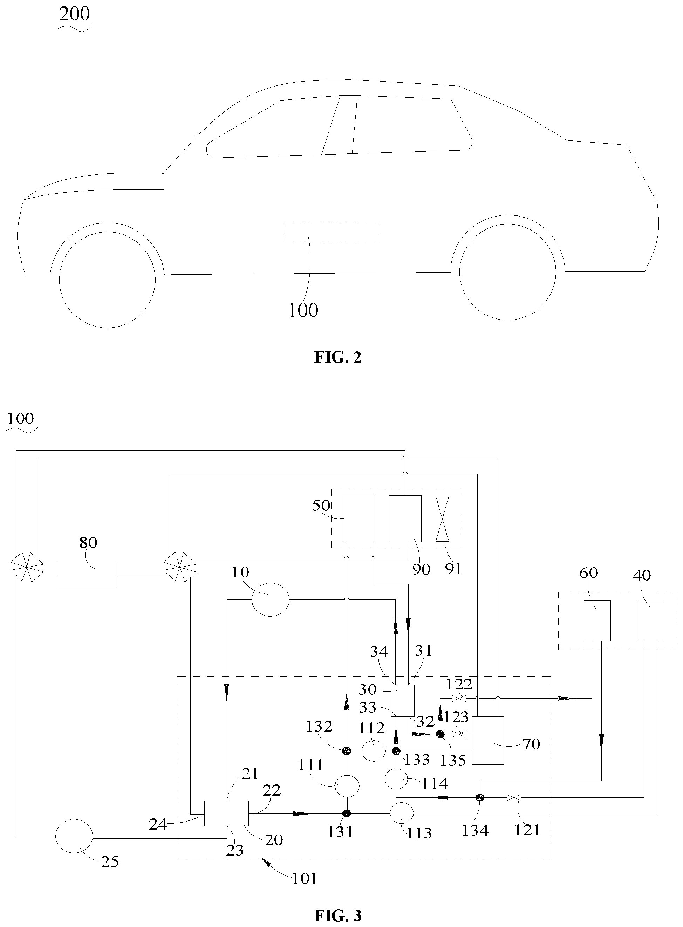

Referring to FIGS. 1 and 2, a thermal management system 100 according to an embodiment of the present disclosure is applied to a vehicle 200. The thermal management system 100 includes a compressor 10, a liquid-cooled gas cooler 20, a coaxial tube 30, an internal gas cooler 40, an external gas cooler 50, and an evaporator 60. The coaxial tube 30 has a high-pressure inlet 31, a high-pressure outlet 32, a low-pressure inlet 33, and a low-pressure outlet 34. The low-pressure outlet 34 is connected to an inlet of the compressor 10, an outlet of the compressor 10 is connected to a first port 21 of the liquid-cooled gas cooler 20, a second port 22 of the liquid-cooled gas cooler 20 is connected to an inlet of the external gas cooler 50 and an inlet of the internal gas cooler 40, an outlet of the external gas cooler 50 is connected to the high-pressure inlet 31, an outlet of the internal gas cooler 40 is connected to a first port of the evaporator 60 and the low-pressure inlet 33, and a second port of the evaporator 60 is connected to the high-pressure outlet 32.

In the thermal management system 100 according to the embodiment of the present disclosure, the thermal management system 100 is applied to a vehicle 200, and the thermal management system 100 includes the compressor 10, the liquid-cooled gas cooler 20, the coaxial tube 30, the internal gas cooler 40, the external gas cooler 50, and the evaporator 60. The coaxial tube 30 has the high-pressure inlet 31, the high-pressure outlet 32, the low-pressure inlet 33, and the low-pressure outlet 34. The low-pressure outlet 34 is connected to the inlet of the compressor 10, the outlet of the compressor 10 is connected to the first port 21 of the liquid-cooled gas cooler 20, the second port 22 of the liquid-cooled gas cooler 20 is connected to the inlet of the external gas cooler 50 and the inlet of the internal gas cooler 40, the outlet of the external gas cooler 50 is connected to the high-pressure inlet 31, the outlet of the internal gas cooler 40 is connected to the first port of the evaporator 60 and the low-pressure inlet 33, and the second port of the evaporator 60 is connected to the high-pressure outlet 32. In this way, the thermal management system 100 is not only applicable to a carbon dioxide refrigerant system, but also applicable to r134a/r1234yf/mixed refrigerant and other refrigerant systems, and the heat release efficiency of the refrigerant is improved by use of the liquid-cooled gas cooler 20 and the coaxial tube 30, and thus the problem that the carbon dioxide module 101 has a poor efficiency in a cooling condition can be solved well. Meanwhile, the thermal management system 100 can be operated stably in a low-temperature environment by using the carbon dioxide as the refrigerant. The coaxial tube 30 is configured to carry out heat exchange between the refrigerant that has been throttled and cooled and the refrigerant before entering the evaporator 60, which can further reduce the enthalpy value of the refrigerant before entering the evaporator 60, thereby prolonging the performance of the evaporation stage and obtaining better cooling performance. In addition, the coaxial tube 30 can improve the energy conversion efficiency in the cooling and heating processes. By use of the coaxial tube 30 connected in series with the liquid-cooled gas cooler 20, the refrigerant is cooled in advance before entering the external gas cooler 50, such that the carbon dioxide releases heat more fully, and thus a cooling condition with higher efficiency is achieved.

Referring to FIG. 1, in some embodiments, the thermal management system 100 further includes a first control valve 111, a second control valve 112, a third control valve 113, and a fourth control valve 114. The second port 22 of the liquid-cooled gas cooler 20 is connected to a first diversion node 131, the first diversion node 131 is connected to the first control valve 111 and the third control valve 113, and the third control valve 113 is connected to the inlet of the internal gas cooler 40. The first control valve 111 is connected to a second diversion node 132, and the second diversion node 132 is connected to the inlet of the external gas cooler 50 and the second control valve 112. The second control valve 112 is connected to a third diversion node 133, and the third diversion node 133 is connected to the low-pressure inlet 33 and the fourth control valve 114. The fourth control valve 114 is connected to a fourth diversion node 134, and the fourth diversion node 134 is connected to the outlet of the internal gas cooler 40 and the first port of the evaporator 60.

In this way, the first control valve 111, the second control valve 112, the third control valve 113, the fourth control valve 114, and the plurality of diversion nodes are disposed on the outlet side of the liquid-cooled gas cooler 20, so that the flow direction of the refrigerant can be controlled and adjusted, to implement different temperature control functions, thereby ensuring fast and accurate temperature adjustment to the vehicle 200. Moreover, the pressure of the refrigerant can be controlled and adjusted by using the liquid-cooled gas cooler 20 and the coaxial tube 30, so that the carbon dioxide, which is more effective, can be used as the refrigerant to achieve temperature adjustment. Additionally, the plurality of control valves, the plurality of diversion nodes, the liquid-cooled gas cooler 20, and the coaxial tube 30 may be integrated and modularized to form the carbon dioxide module 101, which may effectively reduce the number of pipe clamps and joints of the carbon dioxide module 101, reduce the risk of leakage of the refrigerant, and improve the reliability of system operation.

In particular, in an embodiment of the present disclosure, the first control valve 111, the second control valve 112, the third control valve 113, the fourth control valve 114, the plurality of diversion nodes, the liquid-cooled gas cooler 20, and the coaxial tube 30 may form the carbon dioxide module 101, enabling an integrated and modularized design. The carbon dioxide module 101 of the present disclosure can effectively reduce the number of pipe clamps and joints of the carbon dioxide module 101, reduce the risk of leakage of the refrigerant, and is conductive to improving the reliability of system operation.

Further, the thermal management system 100 according to the embodiment of the present disclosure may implement heat circulation management, to implement modes such as passenger compartment heating mode, passenger compartment cooling mode, battery cooling mode, and battery heating mode, enabling different functions. In an embodiment of the present disclosure, the conventional refrigerant R134a/r1234yf can be replaced with the carbon dioxide, and according to characteristics of the carbon dioxide, the carbon dioxide can absorb heat from the environment at an extremely low temperature due to a relatively low saturation temperature at a low pressure. In this way, there is no need to use a Positive Temperature Coefficient (PTC) heater for supplemental heating, and the temperature at an air outlet of the compartment can reach about 30°C in a pure heat pump mode at -25°C, which can achieve rapid heating, and satisfy the heating requirements of the entire vehicle.

Furthermore, the liquid-cooled gas cooler 20 prolongs the length of a heat release stage in a pressure-enthalpy diagram, the coaxial tube 30 can improve the energy conversion efficiency in the cooling and heating processes, and improve the heat release efficiency of the refrigerant, and thus the problem that the carbon dioxide module 101 has a poor efficiency in a cooling condition can be solved well. In the cooling condition, the coaxial tube 30 performs heat exchange between the refrigerant that has been throttled and cooled and the refrigerant before entering the evaporator 60, which can further reduce the enthalpy value of the refrigerant before entering the evaporator 60, thereby prolonging the performance of the evaporation stage and obtaining better cooling performance. Meanwhile, by use of the liquid-cooled gas cooler 20 connected in series with the coaxial tube 30, the refrigerant is cooled in advance before entering the external gas cooler 50, so that the carbon dioxide releases heat more fully, and thus a cooling condition with higher efficiency is achieved. In this way, the efficiency (e.g., heat release efficiency) of the thermal management system 100 can be effectively improved, and at the same time, since the saturation temperature of the carbon dioxide is -40°C at 1 Mpa·A, the carbon dioxide can absorb heat from the environment at a low temperature, and the performance thereof is much higher than that of the ordinary refrigerant, thereby realizing the heat pump cycle.

In addition, a specific type of the refrigerant is not limited in the embodiments of the present disclosure, which are not only applicable to the working medium of the carbon dioxide, but also applicable to various other types of refrigerants, to satisfy different requirements.

Referring to FIG. 1, in some embodiments, the thermal management system 100 further includes a first throttle valve 121, which is connected between the outlet of the internal gas cooler 40 and the fourth diversion node 134.

In this way, the first throttle valve 121 may be configured to throttle and cool the refrigerant, adjust the pressure of the refrigerant to a certain extent, and adjust low-temperature two-phase state of the refrigerant. After flowing out of the outlet of the internal gas cooler 40, the refrigerant may pass through the first throttle valve 121 and then flow to the fourth diversion node 134, and then may flow to the fourth control valve 114 and the evaporator 60, respectively. When the thermal management system 100 is in different modes, the fourth control valve 114 are in different on/off states, and the first throttle valve 121 also controls the refrigerant at different flow rates, so that specific flow directions and flow rates of the refrigerant can be adjusted, to implement different functions.

Further, referring to FIG. 1, in some embodiments, the thermal management system 100 includes a second throttle valve 122, the second throttle valve 122 is connected between the second port of the evaporator 60 and the fifth diversion node 135, and the fifth diversion node 135 is connected to the high-pressure outlet 32.

In this way, the second throttle valve 122 can be configured to throttle and cool the refrigerant, adjust the pressure of the refrigerant to a certain extent, and adjust low-temperature two-phase state of the refrigerant. After flowing out of the second port of the evaporator 60, the refrigerant may pass through the second throttle valve 122 and then flow to the fifth diversion node 135, and then may flow to a chiller 70 and the high-pressure outlet 32, respectively. When the thermal management system 100 is in different modes, the second throttle valve 122 controls the refrigerant at different flow rates, so that the flow rate of the refrigerant can be adjusted to implement different functions.

Furthermore, referring to FIG. 1, in some embodiments, the thermal management system 100 further includes the chiller 70, a first port of the chiller 70 is connected to the fifth diversion node 135 through a third throttle valve 123, and a second port of the chiller 70 is connected to the third diversion node 133.

In this way, the chiller 70 may be configured to allow the battery coolant to flow through, so that the battery coolant can exchange heat with the refrigerant, thereby implementing waste heat recovery, saving energy and reducing power consumption.

In particular, the first throttle valve 121, the second throttle valve 122, and the third throttle valve 123 may be configured to control a flow rate of the refrigerant flowing in the carbon dioxide module 101, so as to throttle and cool the refrigerant, and may be further configured to control a pressure of the refrigerant. In embodiments of the present disclosure, specific types of the first throttle valve 121, the second throttle valve 122, and the third throttle valve 123 are not limited, to satisfy different requirements. For example, the first throttle valve 121, the second throttle valve 122, and the third throttle valve 123 may be electronic expansion valves, each of which uses an electrical signal generated by the adjusted parameters to control a voltage or current applied thereto, thereby achieving the purpose of adjusting the liquid supply amount. A stepless variable-capacity cooling system has a wide adjustment range for the refrigerant supply amount, and requires a fast adjustment response. In addition, in embodiments of the present disclosure, specific types of the first control valve 111, the second control valve 112, the third control valve 113, and the fourth control valve 114 are not limited, to satisfy a variety of requirements.

In some embodiments, the first control valve 111, the second control valve 112, the third control valve 113, and the fourth control valve 114 may be replaced with multi-way valves. For example, two five-way valves connected in series or an eight-way valve may be used to control the refrigerant.

It may be understood that the thermal management system 100 may adjust on/off states of different control valves and throttle valves to implement different flow directions and different flow paths of the refrigerant in the thermal management system 100, so that the thermal management system 100 can implement different modes. However, in different modes, the refrigerant may flow through different paths and selectively flow through different components. In an embodiment of the present disclosure, the coaxial tube 30 has four ports, namely, the high-pressure inlet 31, the high-pressure outlet 32, the low-pressure inlet 33, and the low-pressure outlet 34, to exchange the refrigerant with other components, which does not mean that the refrigerant can only enter the coaxial tube 30 from the inlets and exit the coaxial tube 30 from the outlets. The inlets and the outlets can be controlled by means of valves, in which case, by control of the inlets and the outlets by means of the valves and adjustment on on/off states of different control valves and throttle valves, the refrigerant can enter the coaxial tube 30 from the high-pressure outlet 32 and the low-pressure outlet 34, and exit the coaxial tube 30 from the high-pressure inlet 31 and the low-pressure inlet 33. The specific flowing modes are not limited herein to satisfy different requirements.

Referring to FIG. 1, in some embodiments, the thermal management system 100 further includes a power battery 80, a third port and a fourth port of the chiller 70 are connected to the power battery 80, to adjust the temperature of the power battery 80 by the battery coolant.

In this way, the power battery 80 may be configured to provide power for the vehicle 200, to drive normal operation of the vehicle 200. The power battery 80 may generate heat during the operation thereof. The battery coolant is configured to transfer the heat generated by the power battery 80 to other positions and dissipate the heat. The battery coolant may flow through the chiller 70 and exchange heat with the refrigerant flowing through the chiller 70, to implement heat recovery and reuse, and implement different mode functions.

Referring to FIG. 1, in some embodiments, the thermal management system 100 further includes a radiator 90, which is configured to cool the battery coolant.

In this way, the radiator 90 may be disposed on the outside of the vehicle 200, and after the temperature of the battery coolant rises due to absorption of the heat, the battery coolant may flow through the radiator 90 to release the heat, so that heat circulation can be implemented, and the normal operation of the power battery 80 can be ensured.

Referring to FIG. 1, in some embodiments, the thermal management system 100 further includes an outdoor fan 91, which is configured to dissipate heat for the radiator 90 and the external gas cooler 50.

In this way, after the heat from the battery coolant and the refrigerant is released through the radiator 90 and the external gas cooler 50, the outdoor fan 91 may be operated to quickly release the heat to the external environment, so as to ensure a heat dissipation effect.

Referring to FIG. 1, in some embodiments, the thermal management system 100 further includes a water pump 25, which is connected to a third port 23 of the liquid-cooled gas cooler 20 and drives the battery coolant to enter the liquid-cooled gas cooler 20 through a fourth port 24 of the liquid-cooled gas cooler 20.

In this way, the water pump 25 may pump the battery coolant into the liquid-cooled gas cooler 20, so that the battery coolant and the refrigerant can exchange heat with each other, and the refrigerant can release the heat to the coolant for heat recovery. The water pump 25 may adjust the flow rate and control the temperature of the refrigerant, thereby adjusting the temperature of the passenger compartment to a set value.

In summary, the thermal management system 100 according to the embodiments of the present disclosure can realize the recycling of heat through various components, to ensure that the temperatures of the power battery 80, the passenger compartment, and other positions are constant, and can enable different modes to realize different functions and ensure the comfort of the vehicle 200.

For example, with reference to FIG. 3, the thermal management system 100 includes a cooling mode. In the cooling mode, the compressor 10 is started, and the refrigerant first flows through the liquid-cooled gas cooler 20. At this time, the water pump 25 is not started, no battery coolant flows through the liquid-cooled gas cooler 20, and there is no heat exchange between the refrigerant and the battery coolant. The first control valve 111 is opened, and the third control valve 113 and the second control valve 112 are closed, so that gaseous carbon dioxide refrigerant enters the external gas cooler 50 through the second diversion node 132 for cooling. The cooled refrigerant flows out of the external gas cooler 50, flows through the high-pressure inlet 31 of the coaxial tube 30, and exchanges heat with a low-pressure and low-temperature refrigerant in the coaxial tube 30 to cause the enthalpy value thereof to be reduced, and then flows out of the high-pressure outlet 32 of the coaxial tube 30. The third throttle valve 123 is closed while the second throttle valve 122 is opened to a certain degree of opening, so that the refrigerant is throttled and cooled, and the low-temperature two-phase refrigerant absorbs heat in the evaporator 60 to cool the passenger compartment. The fourth control valve 114 is opened and the first throttle valve 121 and the second control valve 112 are closed, so that the low-temperature refrigerant enters the low-pressure inlet 33 of the coaxial tube 30, contacts the inside of the coaxial tube 30 to absorb the heat at a high-pressure side of coaxial tube 30, then flows out of the low-pressure outlet 34 of the coaxial tube 30, and finally returns to the compressor 10 to complete the cooling cycle.

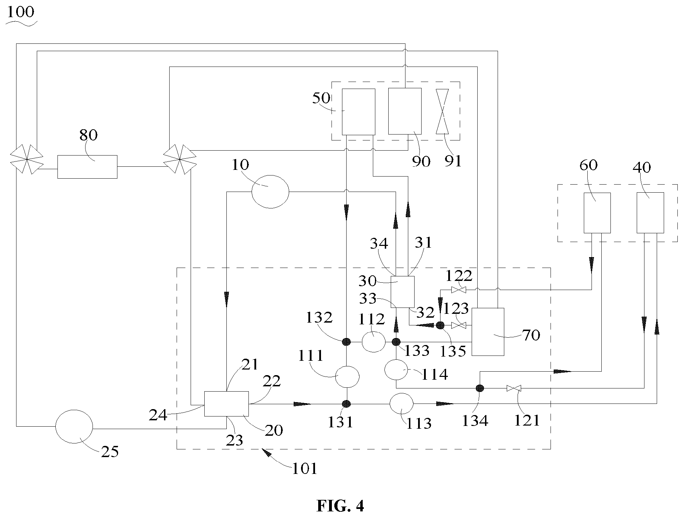

However, the thermal management system 100 also includes other modes. In an example, referring to FIG. 4, the thermal management system 100 further includes a heating mode. In the heating mode, a high-pressure and high-temperature refrigerant is discharged from the outlet of the compressor 10, and first enters the liquid-cooled gas cooler 20. At this time, the water pump 25 is not started, no battery coolant flows through the liquid-cooled gas cooler 20, and there is no heat exchange between the refrigerant and the battery coolant. The first control valve 111 is closed while the third control valve 113 is opened, so that the refrigerant enters the internal gas cooler 40, where the refrigerant releases heat to air with relatively low temperature in the passenger compartment to heat the passenger compartment. The first throttle valve 121 is fully opened while the fourth control valve 114 is closed, so that the unthrottled gaseous carbon dioxide refrigerant enters the interior of the evaporator 60 and continues to release heat. At this time, the evaporator 60 serves as a condenser. The second throttle valve 122 is opened to a certain degree of opening to perform throttling and cooling on the refrigerant. The third throttle valve 123 of the chiller 70 is closed, so that the refrigerant enters the external gas cooler 50 after passing through the coaxial tube 30 to absorb heat from the air. Since the saturation temperature of the carbon dioxide medium under the pressure of 1 MPa is -40.12°C, a large amount of heat can be absorbed from the low temperature environment above -30°C. The second control valve 112 is opened while the fourth control valve 114 is closed, so that the low-temperature refrigerant returns to the compressor 10 to complete the heating cycle.

In another example, the thermal management system 100 further includes a battery cooling mode, which is similar to the cooling cycle. In the battery cooling mode, the refrigerant first flows through the liquid-cooled gas cooler 20. At this time, the water pump 25 is not started, no battery coolant flows through the liquid-cooled gas cooler 20, and there is no heat exchange between the refrigerant and the battery coolant. The third control valve 113 is closed, so that the gaseous carbon dioxide refrigerant enters the external gas cooler 50 for cooling, then flows through the high-pressure inlet 31 of the coaxial tube 30, and exchanges heat with a low-pressure and low-temperature refrigerant in the coaxial tube 30 to cause the enthalpy value thereof to be reduced, and then flows out of the high-pressure outlet 32 of the coaxial tube 30. The second throttle valve 122 is closed while the third throttle valve 123 of the chiller 70 is opened to a certain degree of opening, so as to throttle and cool the refrigerant, and a low-temperature two-phase refrigerant absorbs the heat from the battery coolant in the chiller 70, and thus the battery is cooled. The second control valve 112 is closed and the fourth control valve 114 is closed, so that the low-temperature refrigerant enters the low-pressure inlet 33 of the coaxial tube 30, contacts the inside of the coaxial tube 30 to absorb the heat at the high-pressure side of the coaxial tube 30, and then flows out of the low-pressure outlet 34 of the coaxial tube 30 and returns to the compressor 10 to complete the battery cooling cycle.

In yet another example, the thermal management system 100 further includes a dehumidification mode, which is similar to the heating mode. In the dehumidification mode, the refrigerant first flows through the liquid-cooled gas cooler 20, the water pump 25 is started at a certain duty cycle, and heat is released from the refrigerant to the battery coolant. The temperature of the refrigerant entering the internal gas cooler 40 of the passenger compartment is controlled by adjusting the flow rate of the water pump 25, so as to adjust the temperature of finally dehumidified air to a set value. The first throttle valve 121 is opened to a certain degree of opening, so that the refrigerant is throttled and cooled, and enters the evaporator 60 for evaporation to dehumidify the air. The second throttle valve 122 is opened to a certain degree of opening, so that the refrigerant is throttled and cooled again, and enters the external gas cooler 50 after passing through the coaxial tube 30, to absorb the heat from the air. The second control valve 112 is opened and the fourth control valve 114 is closed, so that the refrigerant flows through the low-pressure inlet 33 and the low-pressure outlet 34 of the coaxial tube 30, and the low-temperature refrigerant returns to the compressor 10 to complete the dehumidification cycle.

In still another example, the thermal management system 100 further includes a waste heat recovery mode, which is similar to the heating mode. In the waste heat recovery mode, the high-pressure and high-temperature refrigerant is discharged from the outlet of the compressor 10 and first enters the liquid-cooled gas cooler 20. At this time, the water pump 25 is not started, and there is no heat exchange between the refrigerant and the battery coolant. The third control valve 113 is opened, so that the high-temperature refrigerant enters the internal gas cooler 40 to heat the passenger compartment. The first throttle valve 121 is completely opened, so that the unthrottled gaseous carbon dioxide refrigerant enters the evaporator 60 and continues to release heat. At this time, the evaporator 60 serves as a condenser. The second throttle valve 122 is opened to a certain degree of opening, so that the refrigerant is throttled and cooled, and enters the external gas cooler 50 after passing through the coaxial tube 30 to absorb heat from the air. Since the carbon dioxide medium has the saturation temperature of -40.12°C at the pressure of 1 MPa, a large amount of heat can be absorbed from a low-temperature environment above -30°C. At the same time, the third throttle valve 123 of the chiller 70 is opened to a certain degree of opening, so that the two-phase refrigerant can also absorb heat from the battery waste heat through the chiller 70. In addition, by a combined use of two sets of water valves of a first four-way valve and a second four-way valve, not only the battery waste heat recovery mode can be achieved, but also a mode in which heat is absorbed from heat generation by the battery or active heating of a motor, or a mode in which heat is absorbed from the ambient air through a water tank, can be achieved. The second control valve 112 is opened while the fourth control valve 114 is closed, and low-temperature refrigerants from two paths converge at the third diversion node 133, and then return to the compressor 10 through the coaxial tube 30 to complete the waste heat recovery cycle.

In addition, the thermal management system 100 according to the embodiments of the present disclosure further includes other modes, which can satisfy different use requirements, and are not specifically limited herein.

Referring to FIG. 2, a vehicle 200 according to an embodiment of the present disclosure includes the thermal management system 100 in any one of the foregoing embodiments.

In the thermal management system 100 and the vehicle 200 according to the embodiments of the present disclosure, the thermal management system 100 is applied to the vehicle 200. The thermal management system 100 includes the compressor 10, the liquid-cooled gas cooler 20, the coaxial tube 30, the internal gas cooler 40, the external gas cooler 50, and the evaporator 60. The coaxial tube 30 has the high-pressure inlet 31, the high-pressure outlet 32, the low-pressure inlet 33, and the low-pressure outlet 34. The low-pressure outlet 34 is connected to the inlet of the compressor 10, and the outlet of the compressor 10 is connected to the first port 21 of the liquid-cooled gas cooler 20. The second port 22 of the liquid-cooled gas cooler 20 is connected to the inlet of the external gas cooler 50 and the inlet of the internal gas cooler 40. The outlet of the external gas cooler 50 is connected to the high-pressure inlet 31. The outlet of the internal gas cooler 40 is connected to the first port of the evaporator 60 and the low-pressure inlet 33. The second port of the evaporator 60 is connected to the high-pressure outlet 32. In this way, the thermal management system 100 is not only applicable to a carbon dioxide refrigerant system, but also applicable to r134a/r1234yf/mixed refrigerant and other refrigerant systems, and the heat release efficiency of the refrigerant is improved by use of the liquid-cooled gas cooler 20 and the coaxial tube 30, and thus the problem that the carbon dioxide module 101 has a poor efficiency in a cooling condition can be solved well. Meanwhile, the thermal management system 100 can be operated stably in a low-temperature environment by using the carbon dioxide as the refrigerant. The coaxial tube 30 is configured to carry out heat exchange between the refrigerant that has been throttled and cooled and the refrigerant before entering the evaporator 60, which can further reduce the enthalpy value of the refrigerant before entering the evaporator 60, thereby prolonging the performance of the evaporation stage and obtaining better cooling performance. In addition, the coaxial tube 30 can improve the energy conversion efficiency in the cooling and heating processes. By use of the coaxial tube 30 connected in series with the liquid-cooled gas cooler 20, the refrigerant is cooled in advance before entering the external gas cooler 50, such that the carbon dioxide releases heat more fully, and thus a cooling condition with higher efficiency is achieved.

In the embodiments of the present disclosure, a specific type of the vehicle 200 is not limited, provided that the vehicle 200 includes the thermal management system 100 of the present disclosure. For example, the vehicle 200 may include an electric vehicle or a hybrid vehicle, to satisfy different requirements.

In the description of the embodiments of the present disclosure, the terms "first," "second," or the like, are merely intended for descriptive purposes, and shall not be construed as indicating or implying relative importance or implicitly indicating a quantity of indicated technical features. Thus, features defined by the terms "first," "second," or the like, may explicitly or implicitly include one or more of the features. In the description of the embodiments of the present disclosure, "a plurality of/multiple" means two or more, unless otherwise specifically defined.

In the description of the present disclosure, the description with reference to the terms "one embodiment," "some embodiments," "an illustrative embodiment," "an example," "a specific example," "some examples," or the like, means that particular features, structures, materials, or characteristics described in conjunction with the embodiment(s) or example(s) are included in at least one embodiment or example of the present disclosure. In this specification, the schematic description of the above terms does not necessarily refer to the same embodiment or example. Furthermore, the particular features, structures, materials, or characteristics as described may be combined in any suitable manner in any one or more embodiments or examples.

Although embodiments of the present disclosure have been shown and described, it would be appreciated by those skilled in the art that various changes, modifications, alternatives, and variations can be made to these embodiments without departing from principles and spirit of the present disclosure. The scope of the present disclosure shall be defined by the claims and their equivalents.

## Claims

1. A thermal management system, applied to a vehicle, **characterized in that** the thermal management system comprises a compressor, a liquid-cooled gas cooler, a coaxial tube, an internal gas cooler, an external gas cooler, and an evaporator,
wherein the coaxial tube comprises a high-pressure inlet, a high-pressure outlet, a low-pressure inlet, and a low-pressure outlet;
the low-pressure outlet is connected to an inlet of the compressor;
an outlet of the compressor is connected to a first port of the liquid-cooled gas cooler;
a second port of the liquid-cooled gas cooler is connected to an inlet of the external gas cooler and an inlet of the internal gas cooler;
an outlet of the external gas cooler is connected to the high-pressure inlet;
an outlet of the internal gas cooler is connected to a first port of the evaporator and the low-pressure inlet; and
a second port of the evaporator is connected to the high-pressure outlet.

2. The thermal management system of claim 1, **characterized in that** the thermal management system further comprises a first control valve, a second control valve, a third control valve, and a fourth control valve,
wherein the second port of the liquid-cooled gas cooler is connected to a first diversion node;
the first diversion node is connected to the first control valve and the third control valve;
the third control valve is connected to the inlet of the internal gas cooler;
the first control valve is connected to a second diversion node;
the second diversion node is connected to the inlet of the external gas cooler and the second control valve;
the second control valve is connected to a third diversion node;
the third diversion node is connected to the low-pressure inlet and the fourth control valve;
the fourth control valve is connected to a fourth diversion node; and
the fourth diversion node is connected to the outlet of the internal gas cooler and the first port of the evaporator.

3. The thermal management system of claim 2, **characterized in that** the thermal management system further comprises a first throttle valve connected between the outlet of the internal gas cooler and the fourth diversion node.

4. The thermal management system of claim 2, **characterized in that** the thermal management system further comprises a second throttle valve connected between the second port of the evaporator and a fifth diversion node, and the fifth diversion node is connected to the high-pressure outlet.

5. The thermal management system of claim 4, **characterized in that** the thermal management system further comprises a chiller,
wherein a first port of the chiller is connected to the fifth diversion node through a third throttle valve; and
a second port of the chiller is connected to the third diversion node.

6. The thermal management system of claim 5, **characterized in that** the thermal management system further comprises a power battery,
wherein a third port and a fourth port of the chiller are connected to the power battery, to adjust a temperature of the power battery by a battery coolant.

7. The thermal management system of claim 6, **characterized in that** the thermal management system further comprises a radiator configured to cool the battery coolant.

8. The thermal management system of claim 7, **characterized in that** the thermal management system further comprises a outdoor fan configured to dissipate heat for the radiator and the external gas cooler.

9. The thermal management system of claim 6, **characterized in that** the thermal management system further comprises a water pump, wherein the water pump is connected to a third port of the liquid-cooled gas cooler and is configured to drive the battery coolant to enter the liquid-cooled gas cooler through a fourth port of the liquid-cooled gas cooler.

10. A vehicle, **characterized in that** the vehicle comprises the thermal management system according to any one of claims 1 to 9.
